# EUROPÄISCHE PATENTSCHRIFT

(11) **EP 3 466 244 B1**
(45) Veröffentlichungstag und Bekanntmachung des Hinweises auf die Patenterteilung: **01.10.2025**
(21) Anmeldenummer: 18185641.0
(22) Anmeldetag: 26.07.2018
(51) Int. Cl.: A01F 12/56, A01D 69/06, F16G 5/08, F16G 5/20, F16H 7/12

(54) **VERBUNDRIEMEN, VERWENDUNG EINES VERBUNDRIEMENS SOWIE RIEMENBETRIEB EINES SELBSTFAHRENDEN MÄHDRESCHERS**
COMPOSITE BELT, USE OF A COMPOSITE BELT AND BELT OPERATION OF A SELF-PROPELLED COMBINE HARVESTER
COURROIE COMPOSITE, UTILISATION D'UNE COURROIE COMPOSITE AINSI QU'ENTRAÎNEMENT DE COURROIE D'UNE MOISSONNEUSE-BATTEUSE AUTOMOTRICE

(30) Priorität: 29.09.2017 DE 102017122706
(43) Veröffentlichungstag der Anmeldung: 10.04.2019
(73) Patentinhaber: CLAAS Selbstfahrende Erntemaschinen GmbH, 33428 Harsewinkel (DE)
(72) Erfinder: Hubert, Raik-Manfred, 31195 Lamspringe (DE)
(74) Vertreter: CLAAS Gruppe

(56) Entgegenhaltungen:
- EP-A1- 0 457 164
- EP-A1- 3 135 956
- CN-Y- 201 145 000
- GB-A- 1 480 566
- US-A- 3 948 113
- US-A1- 2017 273 243
- ANONYMOUS: "BELT DRIVE SYSTEMS MAINTENANCE FREE 35% REDUCED DRIVE COST 67% REDUCED DRIVE WIDTH 50% REDUCED DRIVE WEIGHT", 23 November 2015 (2015-11-23), XP055562193, Retrieved from the Internet <URL:https://web.archive.org/web/20151123024838if_/http://www.gatesaustralia.com.au:80/~/media/files/gates-au/industrial/brochures-and-marketing-collateral/predator-brochure-aus--nz-july-2012.pdf> [retrieved on 20190226]
- ANONYMOUS: "A comprehensive product range A comprehensive product range A comprehensive product range GATES INDUSTRIAL POWER TRANSMISSION", 17 August 2014 (2014-08-17), XP055562231, Retrieved from the Internet <URL:https://web.archive.org/web/20140817114326if_/http://www.uzimex.cz:80/soubory/20070621_gates_katalog_en.pdf> [retrieved on 20190226]

## Beschreibung

Die Erfindung betrifft einen Verbundriemen, umfassend eine Decklage und zwei mit dieser in Kraft übertragender Weise verbundene Rippen, wobei jede Rippe im Querschnitt die Form eines symmetrischen Trapezes besitzt, das jeweils mit seiner Basis an eine längere Seite eines Rechtecks anschließt, das wiederum einen Querschnitt der Decklage bildet, und wobei jede Rippe in einem der Basis zugewandten Oberbau und in einem der Basis abgewandten Unterbau jeweils ein Elastomermaterial sowie zwischen dem Oberbau und dem Unterbau eine Mehrzahl von jeweils parallel zueinander und jeweils in Längsrichtung des Verbundriemens verlaufenden Zugsträngen aufweist.

Des Weiteren betrifft die Erfindung die Verwendung eines solchen Verbundriemens in einem Riementrieb eines selbstfahrenden Mähdreschers, insbesondere in einem eine Einlegetrommel oder eine Vorbeschleunigungstrommel, antreibenden Riementrieb.

Schließlich betrifft die Erfindung einen Riementrieb eines selbstfahrenden Mähdreschers, insbesondere einen eine Einlegetrommel oder eine Vorbeschleunigungstrommel antreibenden Riementrieb.

Die eingangs beschriebenen Verbundriemen, die auch als "Verbundkeilriemen" oder "Kraftbänder" bezeichnet werden, stellen einen Verbund einer Mehrzahl von (Schmal-) Keilriemen dar, wobei die einzelnen Keilriemen parallel nebeneinander angeordnet und durch die Decklage, auch Riemenrücken genannt, miteinander verbunden sind. Der Vorteil von Verbundkeilriemen gegenüber einer entsprechenden Mehrzahl von Einzelriemen ist die Vermeidung einer Verdrehung durch die laterale Kopplung, wodurch eine absolut gleichmäßige Kraftverteilung auf alle einzelnen Rippen (entsprechend den Einzelriemen) gewährleistet ist. Hieraus resultieren eine geringe Anfälligkeit gegenüber Schwingungen und Stößen sowie hohe Bruchlasten und Belastbarkeit sowie eine lange Lebensdauer. Insbesondere sind derartige Verbundriemen auch für große Achsabstände der Riemenscheiben geeignet, was sie auch für den Einsatz in großen landwirtschaftlichen Maschinen, wie beispielsweise selbstfahrenden Mähdreschern, prädestiniert.

Die DE 10 2013 103 450 A1 offenbart ein als Riementriebe ausgebildetes Antriebssystem eines selbstfahrenden Mähdreschers, wobei in bestimmten Riementrieben auch Verbundriemen mit zwei Rippen eingesetzt werden. Üblicherweise stehen die diversen drehend angetriebenen Einrichtungen, insbesondere die Dresch- und Trenneinrichtungen sowie eine Strohhäckseleinrichtung, über diverse Riementriebe mit einem Abtrieb einer meist als Dieselmotor ausgeführten Brennkraftmaschine in Verbindung. Im Fall der DE 10 2013 103 450 wird ein erster Hauptriementrieb vorgeschlagen, der die Hauptantriebsscheibe, eine erste Vorgelegestufe und eine zweite Vorgelegestufe enthält. Um einen funktionssicheren Antrieb der Einrichtung zur Restkornabscheidung, des Stohhäckslers sowie von leistungsstarken Erntevorsätzen zu gewährleisten, wird vorgeschlagen, dass die erste Vorgelegestufe über einen ersten Riementrieb unmittelbar die Einrichtung zur Restkornabscheidung und über einen zweiten Riementrieb den Strohhäcksler antreibt. Außerdem soll die zweite Vorgelegestufe trieblich mit Antrieben eines Erntevorsatzes und einer Reinigungsvorrichtung verbunden sein. Verbesserungsbedarf besteht bei dem bekannten Mähdrescher und dem dort realisierten Riementrieb-Antriebssystem im Hinblick auf die Riementriebe zum Antrieb der Einlegetrommel sowie der Vorbeschleunigungstrommel sowie im Hinblick auf die Qualität der für die vorgenannten Riementriebe verwendeten Verbundriemen. Weitere Verbundriemen sind aus den Veröffentlichungen XP055562193 - "BELT DRIVE SYSTEMS, MAINTENANCE FREE, 35% REDUCED DRIVE COST, 67% REDUCED DRIVE WIDTH; 50% REDUCED DRIVE WEIGHT", XP055562231 - "GATES INDUSTRIAL POWER TRANSMISSION - A comprehensive product range" und US 3 948 113 A bekannt.

Der Erfindung liegt die Aufgabe zugrunde, einen Verbundriemen zur Verwendung in einem Riementrieb eines Antriebssystems eines selbstfahrenden Mähdreschers vorzuschlagen, der sich durch eine große übertragbare Leistung sowie geringe Herstellkosten auszeichnet. Darüber hinaus soll ein Riementrieb zum Antrieb einer Einlegetrommel oder einer Vorbeschleunigungstrommel jeweils eines selbstfahrenden Mähdreschers bereitgestellt werden, der sich durch eine hohe Leistungsdichte auf begrenztem Bauraum sowie eine Effizienzsteigerung durch eine hohe Riemenauslastung auszeichnet.

Ausgehend von einem Verbundriemen mit den Merkmalen des Oberbegriffs des Anspruchs 1 wird die Aufgabe in Verbindung mit den kennzeichnenden Merkmalen dieses Anspruchs gelöst. Dementsprechend beträgt die Länge des Verbundriemens zwischen 2.500 mm und 2.900 mm, die Bruchlast des Verbundriemens 45.000 N und die von dem Verbundriemen im Dauerbetrieb übertragbare Leistung mindestens 50 kW.

Ein derartiger Riemen greift auf ein bekanntes und vielfach bewährtes Prinzip der zweirippigen Verbundriemen zurück und wirft somit hinsichtlich der Herstellbarkeit und der Herstellungskosten keine besonderen Probleme auf. Gleichwohl besitzt er mit seiner speziellen Länge, der genannten Riemen-Bruchlast, die einer Bruchlast einer einzelnen Rippe (entsprechend einem Einzelriemen) von 22.500 N entspricht und seiner im Dauerbetrieb übertragbaren Leistung eine Merkmalskombination, mit der sich besonders bauraumsparende und effiziente Riementriebe für den Einlegetrommel- oder Vorbeschleunigungstrommel-Antrieb eines selbstfahrenden Mähdreschers realisieren lassen. So ermöglicht die gewählte Länge eine besonderes vorteilhafte Anordnung der Achsen der einzelnen Riemenscheiben bzw. Spannrollen der jeweiligen Riementriebe zueinander sowie besonders große Umschlingungswinkel, wodurch die sicher und schlupffrei übertragbaren Riemenkräfte bzw. die daraus resultierenden Drehmomente besonders hoch sind. Es ergibt sich folglich eine besonders große Leistungsdichte eines mit dem erfindungsgemäßen Verbundriemen ausgestatteten Riementriebs. Gleichwohl entfernt sich der Verbundriemen gemäß der Erfindung bewusst nicht übermäßig weit von bekannten Verbundriemen, um die bestehenden Fertigungsmethoden und die verwendeten Materialien für die einzelnen Komponenten des Verbundriemens zum großen Teil weiter verwenden zu können. Es besteht somit bei dem erfindungsgemäßen Verbundriemen nicht die Notwendigkeit, durchweg absolute "Hochleistungsmaterialien" zu verwenden oder auf Herstellverfahren mit hochkomplizierten Prozessen oder besonders aufwändigen Schritten zurückgreifen zu müssen.

Vorzugsweise beträgt eine maximale Längung des Verbundriemens nach einem Betrieb mit einer von dem Verbundriemen übertragenen Mindestdauerleistung von 50 kW über einen Zeitraum von 200 Stunden 1 % der ursprünglichen Länge des Verbundriemens

Besonders vorteilhaft ist eine Länge des erfindungsgemäßen Verbundriemens zwischen 2.600 mm und 2.800 mm. Ganz besonders vorteilhaft ist eine Länge von 2.640 mm sowie eine Länge von 2.800 mm.

Um große Riemenkräfte mit vergleichsweise kleiner Riemen-Querschnittsfläche übertragen zu können, kann vorgesehen sein, dass zumindest ein Teil der Zugstränge Filamente enthält, die zumindest zum Teil aus einem aromatischen Polyamid, insbesondere hochfestem Aramid, und/oder Karbon bestehen. Derartige Filamente besitzen eine besonders große Reißfestigkeit und gleichzeitig eine hohe Flexibilität, um auch kleine Krümmungsradien beim Betrieb des erfindungsgemäßen Verbundriemens in einem Riementrieb zu ermöglichen.

Die vorliegende Erfindung bezieht sich gleichfalls auf einen Riementrieb für einen selbstfahrenden Mähdrescher, insbesondere einen eine Einlegetrommel oder eine Vorbeschleunigungstrommel antreibenden Riementrieb.

In Bezug auf einen Einlegetrommel-Antrieb weist der erfindungsgemäße Riementrieb zwei Riemenscheiben mit identischem Durchmesser und vorzugsweise in Form identischer Riemenscheiben auf, wobei eine dieser identischen Riemenscheiben die Einlegetrommel antreibt und wobei des Weiteren eine Spannrolle vorhanden ist, die vollständig innerhalb einer Hüllkurve des Riementriebs - betrachtet ohne die Spannrolle - angeordnet ist. Ein solcher Riementrieb weist erfindungsgemäß einen Verbundriemen, wie er weiter oben erläutert ist, auf.

Ein derartiger Riementrieb zeichnet sich durch seine besondere Kompaktheit und damit seine hohe Leistungsdichte aus. Da die Spannrolle nicht über die Hüllkurve des Riementriebs - betrachtet ohne die Spannrolle - hinausgeht, wird wertvoller Bauraum gegenüber herkömmlichen Riementrieben eingespart. Hinzu kommt, dass mit dem erfindungsgemäßen Verbundriemen ein sehr leistungsfähiges und gleichwohl auf bekannter Technologie aufbauendes Zugmittel geschaffen wird, das sich zudem kostengünstig herstellen lässt und sich aufgrund seiner Bauart durch eine hohe Zuverlässigkeit im Betrieb auszeichnet.

Besonders hohe Riemenkräfte lassen sich übertragen, d.h. große Drehmomente bzw. Leistungen mittels des Riementriebs übertragen, wenn ein jeweiliger Umschlingungswinkel an den Riemenscheiben größer als 220° und/oder ein Umschlingungswinkel an der Spannrolle größer als 60°, vorzugsweise größer als 80°, ist.

Sofern es sich bei dem Riementrieb um einen solchen für einen Vorbeschleunigungstrommel-Antrieb handelt, weist der Riementrieb erfindungsgemäß eine als Antrieb dienende Doppelriemenscheibe auf, die mit einer Dreschtrommelwelle gekoppelt ist, wobei der Verbundriemen auf eine einen kleineren Durchmesser aufweisende Riemenscheibe der Doppelriemenscheibe wirkt. Des Weiteren weist der Riementrieb eine als Abtrieb dienende Riemenscheibe auf, mittels der die Vorbeschleunigungstrommel selbst antreibbar ist und eine in einem Leertrum angeordnete Spannrolle, die vollständig innerhalb einer Hüllkurve des Riementriebs - betrachtet ohne die Spannrolle - angeordnet ist.

Wiederum ergibt sich auf diese Weise ein Riementrieb mit hervorragender Leistungsdichte und Kompaktheit. Der auch für diesen Riementrieb verwendete erfindungsgemäße Verbundriemen stellt ein maßgeschneidertes Zugmittel dar, das einen hervorragenden Kompromiss zwischen Leistungsfähigkeit und Haltbarkeit einerseits und geringen Herstellkosten und Rückgriff auf grundsätzlich bekannte Technologie im Herstellverfahren andererseits darstellt.

Besonders vorteilhaft ist der vorgenannte Riementrieb in Form eines Vorbeschleunigungstrommel-Antriebs, wenn ein Umschlingungswinkel an der den kleineren Durchmesser aufweisenden Riemenscheibe der Doppelriemenscheibe größer als 220° und/oder ein Umschlingungswinkel an der die Vorbeschleunigungstrommel antreibenden Riemenscheibe größer oder gleich 200° ist und/oder ein Umschlingungswinkel an der Spannrolle größer als 60° ist.

Eine hervorragende Kompaktheit des Riementriebs lässt sich in diesem Zusammenhang dann erzielen, wenn der Abstand der Achse der Spannrolle von einer Verbindungsgerade zwischen der Achse der Doppelriemenscheibe und der Achse der Riemenscheibe zum Antrieb der Vorbeschleunigungstrommel kleiner als 200 mm, vorzugsweise kleiner als 190 mm, ist.

Die Erfindung wird nachfolgend anhand mehrerer Ausführungsbeispiele sowohl eines Verbundriemens als auch zweier Riementriebe näher erläutert. Es zeigt:
- Fig. 1:: Einen Querschnitt durch einen Verbundriemen,
- Fig. 2:: eine Seitenansicht in Fahrtrichtung links eines Mähdreschers mit Darstellung eines Einlegetrommel-Antriebs,
- Fig. 3:: den Einlegetrommelantrieb gemäß Figur 2,
- Fig. 4:: eine Seitenansicht in Fahrtrichtung rechts des Mähdreschers gemäß Figur 2 mit Darstellung eines Vorbeschleunigungstrommel-Antriebs sowie eines Dreschtrommelantriebs und
- Fig. 5:: den Vorbeschleunigungstrommel-Antrieb gemäß Figur 4.

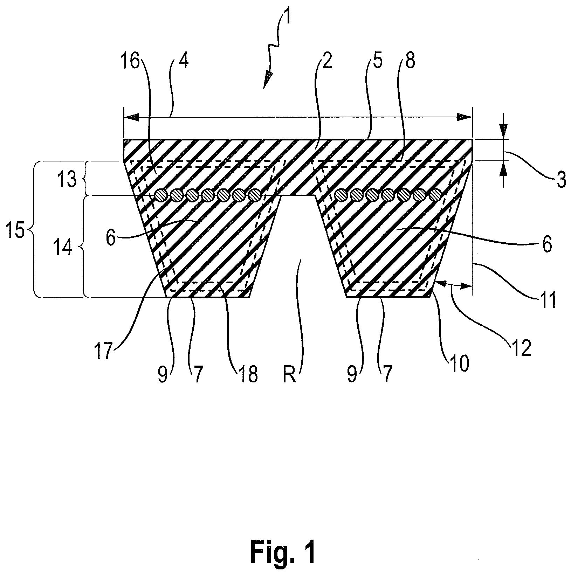

Ein in Figur 1 im Querschnitt dargestellter Verbundriemen 1 (Verbundkeilriemen) besteht aus einer im Querschnitt flach rechteckförmigen Decklage 2 mit einer Dicke 3 und einer Breite 4. Die Dicke 3 beträgt 13 ± 2 mm und die Breite 4 beträgt 37 ± 2 mm. Eine Oberfläche 5 der Decklage 2 bildet einen so genannten Rücken des Verbundriemens 1. Eine Längsrichtung des Verbundriemens verläuft senkrecht zur Zeichnungsebene.

Die Decklage 4 bildet einen Verbund mit zwei parallel zueinander verlaufenden, im Querschnitt jeweils trapezförmigen Rippen 6, die sich von einer der Oberfläche 5 gegenüber liegenden Oberfläche 7 erstrecken. Zwischen den Rippen 6 befindet sich eine gleichfalls trapezförmige Rille R. Die den Querschnitt der Rippen 6 bildenden Trapeze besitzen jeweils eine Basis 8 und jeweils eine parallel hierzu verlaufende, der Basis 8 gegenüber liegende Grundseite 9, die jeweils eine der Oberfläche 5 gegenüber liegende Oberfläche des Verbundriemens 1 begrenzt. Die jeweiligen Schenkel 10 der beiden Trapeze 8 schließen mit einer zu der Oberfläche 7 senkrecht verlaufenden Geraden 11 jeweils einen Winkel 12 von 39 ± 3° ein.

Die Decklage 2 besteht aus einem Elastomermaterial in Form von gewebeverstärktem Chloropren.

Der Querschnitt der Rippen 6 kann aufgeteilt werden in einen der Decklage 2 zugewandten Oberbau 13 und einem sich von der Grundseite 9 bis an den Oberbau 13 heran erstreckenden Unterbau 14. Die Summe aus der Höhe des Oberbaus 13 und der Höhe des Unterbaus 14 entspricht somit der Gesamthöhe 15 der Rippe 6.

Zwischen dem Oberbau 13 und dem Unterbau 14, also jeweils ungefähr zu Hälfte von beiden umschlossen, befinden sich in einer jeden Rippe Zugstränge 16, die parallel zueinander angeordnet sind und innerhalb einer Ebene verlaufen, die parallel zu der den Rücken bildenden Oberfläche 5 ausgerichtet ist. Im vorliegenden Fall sind jeweils mindestens 6 Zugstränge 16 pro Rippe 6 vorhanden. Jeder Zugstrang 16 besteht aus einem Multifilamentfaden mit einem Durchmesser von 1,9 mm bis 2 mm. Die Einzelfilamente, die den jeweiligen Zugstrang 16 bilden, bestehen aus aromatischem Polyamid.

Der Oberbau 13 und der Unterbau 14 jeder Rippe 6 bestehen jeweils aus einem Elastomermaterial in Form von faserverstärktem Chloropren.

Darüber hinaus ist jede Rippe 6 an ihren Außenseiten mit zwei Ummantelungen 17, 18 aus einem Gewebe versehen. Die äußere Ummantelung 17 bildet im Querschnitt sowohl die Grundseite 9 als auch die Basis 8 als auch die beiden Schenkel 10 ("Flanken" des Verbundriemens 1) des Trapezes. Die innere Ummantelung 18 befindet sich in sehr geringem Abstand innerhalb der äußeren Ummantelung 17.

Die (gestreckte) Länge des einen in sich geschlossenen Ring bildenden Verbundriemens 1 beträgt insbesondere 2.640 mm (für einen Einlegetrommel-Antrieb) oder 2.800 mm (für einen Vorbeschleunigungstrommel-Antrieb).

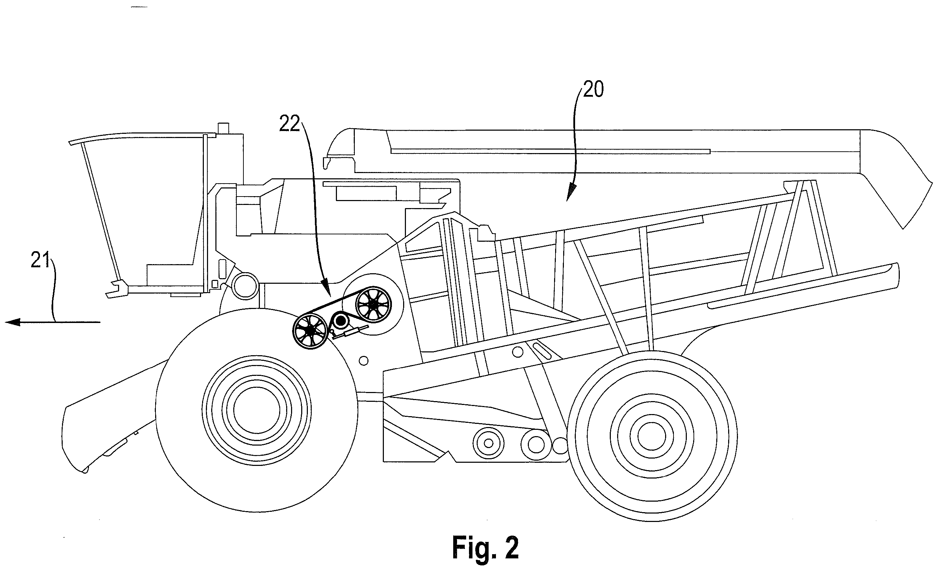

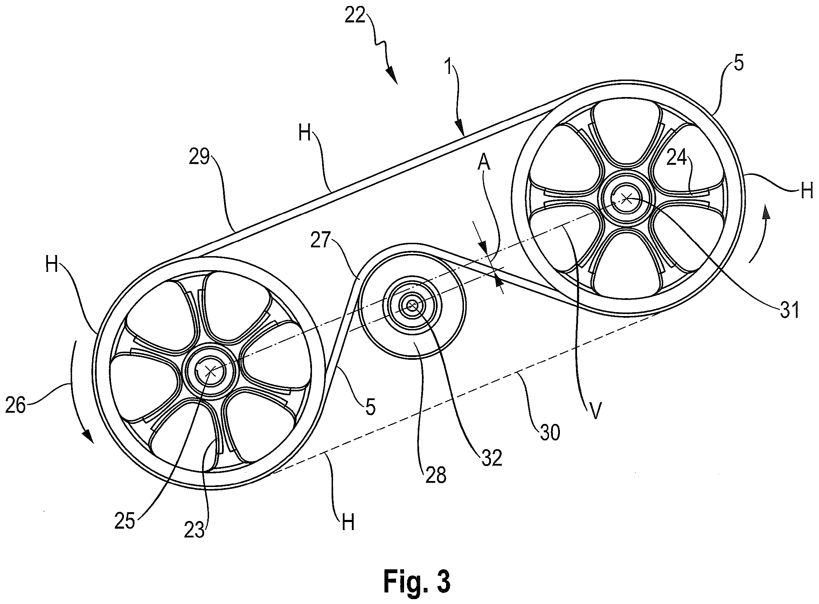

Ein in Figur 2 schematisch dargestellter selbstfahrender Mähdrescher 20 besitzt grundsätzlich einen aus dem Stand der Technik bekannten Aufbau, weist allerdings insbesondere im Hinblick auf die Riementriebe zum Antrieb einer Einlegetrommel sowie einer Vorbeschleunigungstrommel eine erfindungsgemäße, besondere Ausgestaltung auf. In Figur 2 ist die Lage eines in Fahrtrichtung 21 auf der linken Seite angeordneten Riementriebs 22 zum Antrieb einer Einlegetrommel veranschaulicht. Weitere Einzelheiten des Aufbaus des Riementriebs 22 ergeben sich aus Figur 3:

Der Riementrieb 22 weist zwei Riemenscheiben 23, 24 auf, die jeweils identisch ausgebildet sind und insbesondere auch einen identischen Durchmesser besitzen. Unter dem Durchmesser einer Riemenscheibe ist in diesem Zusammenhang der diametral durch die Achse der jeweiligen Riemenscheibe gemessene Abstand der neutralen Faser des auf einer Riemenscheibe laufenden (Verbund-)Riemens zu verstehen.

Die Achse 25 der Riemenscheibe 23 entspricht der Achse einer Dreschtrommel bzw. Dreschtrommelwelle, mit der die Riemenscheibe 23 drehmomentfest gekoppelt ist. Die Drehrichtung der Riemenscheibe 23 ist durch den Pfeil 26 veranschaulicht. Die Riemenscheibe 24 treibt auf nicht näher dargestellte aber bekannte Weise eine Einlegetrommel des Mähdreschers an.

In einem Leertrum 27 des Verbundriemens 1 befindet sich eine Spannrolle 28, die mittels einer nicht näher dargestellten aber bekannten Spanneinrichtung gegen den Rücken des Verbundriemens 1 gedrückt wird, um eine bestimmte Riemenspannung zu erhalten.

Betrachtet man den Riementrieb 22 ohne die Spannrolle 28, so wird eine Hüllkurve H um den Riementrieb 22 zum einen von einem dem Leertrum 27 gegenüberliegenden Lasttrum und zum anderen von einer tangential zu den beiden Riemenscheiben 23 und 24 verlaufenden Geradenabschnitt 30 gebildet. Außerdem bilden die halbkreisförmig die Riemenscheiben 23 und 24 umschließenden Abschnitte des Verbundriemens 1 Teile der Hüllkurve. Es ist der Figur 3 gut zu entnehmen, dass die Spannrolle 28 vollständig innerhalb der wie vorstehend definierten Hüllkurve des Riementriebs 22.

Im vorliegenden Fall beträgt der Durchmesser der beiden Riemenscheiben 23, 24 jeweils 350 mm, der Durchmesser der Spannrolle 163 mm. Der Umschlingungswinkel an der Riemenscheibe 23 beträgt 228°, an der Riemenscheibe 24 222° und an der Spannrolle 90°.

Ein Abstand zwischen der Achse 25 der Riemenscheibe 23 und der Achse 31 der Riemenscheibe 24 beträgt 685 mm. Ein Abstand zwischen der Achse 25 der Riemenscheibe 23 und der Achse 32 der Spannrolle 28 beträgt 325 mm. Ein Abstand zwischen der Achse 32 der Spannrolle 28 und der Achse 31 der Spannrolle 28 beträgt 326 mm. Wie bereits zuvor ausgeführt beträgt die Länge des Verbundriemens 2.640 mm.

Des Weiteren beträgt ein Abstand A der Achse 32 der Spannrolle 28 von einer Verbindungsgeraden V zwischen der Achse 25, der Riemenscheibe 23 und der Achse 31 der Riemenscheibe 24 25 mm.

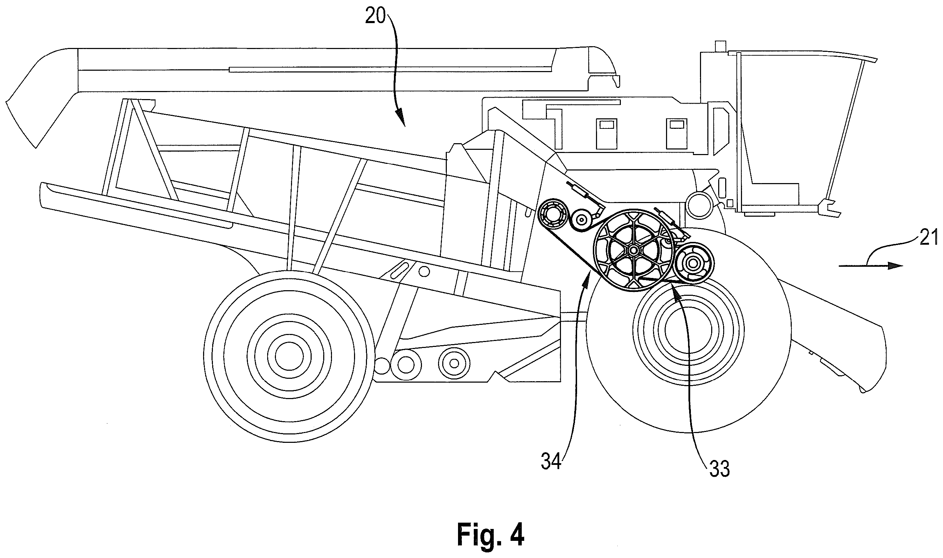

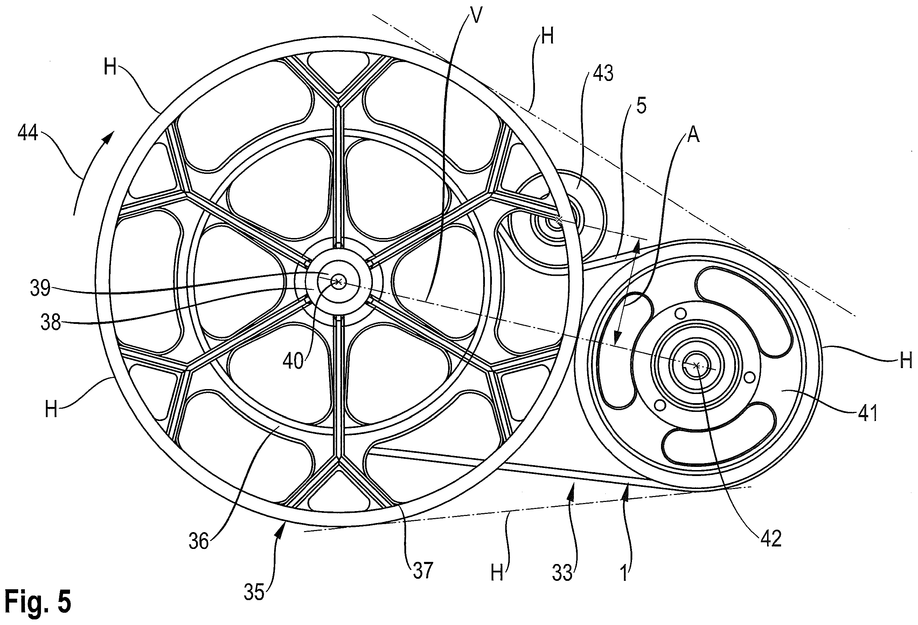

In analoger Weise zu Figur 2 zeigt Figur 4 eine Seitenansicht des Mähdreschers 20, in diesem Fall allerdings der rechten Seite (in Fahrtrichtung 21 betrachtet). Aus Figur 4 kann in schematischer Weise die Position eines Riementriebs 33 entnommen werden, der zum Antrieb einer Vorbeschleunigungstrommel dient. Darüber hinaus ist in Figur 4 schematisch auch ein Dreschtrommelantrieb dargestellt, der von einem zweiten Riementrieb 34 gebildet wird, dessen Aufbau und Funktionsweise im vorliegenden Fall aber nicht weiter von Relevanz sind. Aus Figur 5 lassen sich die Details des Riementriebs 33 zum Antrieb der Vorbeschleunigungstrommel entnehmen:

Der Riementrieb 33 umfasst eine Doppelriemenscheibe 35, die eine Riemenscheibe 36 mit kleinerem Durchmesser und eine Riemenscheibe 37 mit größerem Durchmesser umfasst und als einstückiges Verbundbauteil ausgeführt ist, so dass die beiden Riemenscheiben 36, 37 nicht voneinander trennbar sind. Die beiden Riemenscheiben 36, 37, d.h. die Doppelriemenscheibe 35, besitzen eine gemeinsame Nabe 38, die eine Dreschtrommelwelle 39, die um die Achse 40 drehbar ist, aufnimmt. Der Verbundriemen 1 läuft außerdem um eine Riemenscheibe 41 mit einer Achse 42, wobei die Riemenscheibe 41 zum Antrieb einer Vorbeschleunigungstrommel dient. Mit der Vorbeschleunigungstrommel wird das am Ende des Schrägförderers abgegebene Erntegut auf ca. 80 % der Umfangsgeschwindigkeit der Dreschtrommel vorbeschleunigt. Anschließend wird das Erntegut von der Vorbeschleunigungstrommel an die Dreschtrommel übergeben.

Außerdem läuft der Verbundriemen 1 in dem Riementrieb 33 mit seiner den Rücken bildenden Oberfläche 5 um eine Spannrolle 43, die, wie auch die bereits weiter oben erwähnte Spannrolle 28 in dem Riementrieb 22, mit einer nicht näher beschriebenen oder bekannten Spanneinrichtung versehen ist.

Die Laufrichtung des Verbundriemens 1 bzw. Drehrichtung der Riemenscheibe 41 bzw. Doppelriemenscheibe 35 ist durch den Pfeil 44 veranschaulicht.

In dem Riementrieb 33 beträgt der Umschlingungswinkel an der Riemenscheibe 36 der Doppelriemenscheibe 35 229°, der Umschlingungswinkel an der Riemenscheibe 41 200° und der Umschlingungswinkel an der Spannrolle 43 69°. Ein Abstand zwischen der Achse 40 der Doppelriemenscheibe 35 und der Achse 42 der Riemenscheibe 41 beträgt 610 mm. Ein Abstand der Achse 45 der Spannrolle 43 zu der Achse 42 der Riemenscheibe 41 beträgt 335 mm und zu der Achse 40 der Doppelriemenscheibe 38 378,5 mm. Die Länge des Verbundriemens 1 des Riementriebs 33 beträgt 2.800 mm.

Der Abstand der Achse 45 der Spannrolle 43 zu einer Verbindungsgeraden V zwischen der Achse 42 der Riemenscheibe 41 und der Achse 40 der Doppelriemenscheibe 35 beträgt 190 mm.

Wie auch bei dem Ausführungsbeispiel gemäß den Figuren 2 und 3 liegt die Spannrolle 43 vollständig innerhalb einer Hüllkurve H, die den Riementrieb 33 einhüllt. In diesem Fall verläuft die Hüllkurve H um die Riemenscheibe 37 mit dem größeren Durchmesser, wie sich aus Figur 5 ergibt.

### Bezugszeichenliste

- 1: Verbundriemen
- 2: Decklage
- 3: Dicke
- 4: Breite
- 5: Oberfläche
- 6: Rippe
- 7: Oberfläche
- 8: Basis
- 9: Grundseite
- 10: Schenkel
- 11: Gerade
- 12: Winkel
- 13: Oberbau
- 14: Unterbau
- 15: Gesamthöhe
- 16: Zugstrang
- 17: Ummantelung
- 18: Ummantelung
- 20: Mähdrescher
- 21: Fahrtrichtung
- 22: Riementrieb
- 23: Riemenscheibe
- 24: Riemenscheibe
- 25: Achse
- 26: Pfeil
- 27: Leertrum
- 28: Spannrolle
- 30: Geradenabschnitt
- 31: Achse
- 32: Achse
- 33: Riementrieb
- 34: Riementrieb
- 35: Doppelriemenscheibe
- 36: Riemenscheibe
- 37: Riemenscheibe
- 38: Nabe
- 39: Dreschtrommelwelle
- 40: Achse
- 41: Riemenscheibe
- 42: Achse
- 43: Spannrolle
- 44: Pfeil
- 45: Achse
- 46: Leertrum

- A: Abstand
- H: Hüllkurve
- R: Rille
- V: Verbindungsgerade

## Patentansprüche

1. Verbundriemen (1) umfassend eine Decklage (2) und zwei mit dieser in Kraft übertragender Weise verbundene Rippen (6), wobei jede Rippe (6) im Querschnitt die Form eines symmetrischen Trapezes besitzt und jeweils mit einer Basis (8) an eine längere Seite eines Rechtecks anschließt, das einen Querschnitt der Decklage (2) bildet, und wobei jede Rippe (6) in einem der Basis (8) zugewandten Oberbau (13) und in einem der Basis (8) abgewandten Unterbau (14) jeweils ein Elastomermaterial sowie zwischen dem Oberbau (13) und dem Unterbau (14) eine Mehrzahl von jeweils parallel zueinander und jeweils in Längsrichtung des Verbundriemens (1) verlaufenden Zugsträngen (16) zur Aufnahme der von dem Verbundriemen (1) zu übertragenden Längskräfte aufweist, **dadurch gekennzeichnet, dass** die Länge des Verbundriemens (1) zwischen 2.500 mm und 2.900 mm, die Bruchlast des Verbundriemens (1) 45.000 N und die von dem Verbundriemen (1) im Dauerbetrieb übertragbare Leistung mindestens 50 kW beträgt.

2. Verbundriemen nach Anspruch 1, **dadurch gekennzeichnet, dass** eine maximale Längung des Verbundriemens (1) nach einem Betrieb mit einer von dem Verbundriemen (1) übertragenen Mindestdauerleistung von 50 kW über einen Zeitraum von 200 Stunden 1 % der ursprünglichen Länge des Verbundriemens (1) beträgt.

3. Verbundriemen nach Anspruch 1 oder 2, **dadurch gekennzeichnet, dass** die Länge zwischen 2.600 mm und 2.800 mm, insbesondere 2.640 mm oder 2.800 mm beträgt.

4. Verbundriemen nach einem der Ansprüche 1 bis 3, **dadurch gekennzeichnet, dass** zumindest ein Teil der Zugstränge (16) Filamente enthält, die zumindest zum Teil aus einem aromatischen Polyamid, insbesondere hochfestem Aramid, und/oder Karbon bestehen.

5. Verwendung eines Verbundriemens (1) gemäß einem der Ansprüche 1 bis 4 in einem Riementrieb (22, 33) eines selbstfahrenden Mähdreschers (20), insbesondere in einem eine Einlegetrommel oder eine Vorbeschleunigungstrommel antreibenden Riementrieb (22, 33).

6. Verwendung nach Anspruch 5, **dadurch gekennzeichnet, dass** der Riementrieb (22) zwei Riemenscheiben (23, 24) mit identischem Durchmesser, von denen mittels einer Riemenscheibe (24) die Einlegetrommel antreibbar ist, wobei in einem Leetrum (27) des Riementriebs (22) eine Spannrolle (28) angeordnet ist, die vollständig innerhalb einer Hüllkurve (H) des Riementriebs (22) - betrachtet ohne die Spannrolle (28) - angeordnet ist.

7. Verwendung nach Anspruch 6, **dadurch gekennzeichnet, dass** ein jeweiliger Umschlingungswinkel an der Riemenscheibe (23, 24) größer als 220° und/oder ein Umschlingungswinkel an der Spannrolle (28) größer als 60°, vorzugsweise größer als 80°, ist.

8. Verwendung nach Anspruch 5, **dadurch gekennzeichnet, dass** der Riementrieb (33) eine als Antrieb dienende Doppelriemenscheibe (35), die mit einer Dreschtrommelwelle (39) gekoppelt ist, wobei der Verbundriemen auf eine einen kleineren Durchmesser aufweisende Riemenscheibe (36) der Doppelriemenscheibe (35) wirkt, des Weiteren eine als Abtrieb dienende Riemenscheibe (41) aufweist, mittels der eine Vorbeschleunigungstrommel antreibbar ist, und eine in einem Leertrum (46) angeordnete Spannrolle (43) aufweist, die vollständig innerhalb einer Hüllkurve (H) des Riementriebs (33) - betrachtet ohne die Spannrolle (43) - angeordnet ist, wobei die Hüllkurve (H) die Riemenscheibe (37) mit dem größeren Durchmesser der Doppelriemenscheibe (35) einhüllt.

9. Verwendung nach Anspruch 8, **dadurch gekennzeichnet, dass** ein Umschlingungswinkel an der den kleineren Durchmesser aufweisenden Riemenscheibe (36) der Doppelriemenscheibe (35) größer als 200° und/oder ein Umschlingungswinkel an der die Vorbeschleunigungstrommel antreibenden Riemenscheibe (41) größer als oder gleich 200° und/oder ein Umschlingungswinkel an der Spannrolle (43) größer als 60° ist.

10. Verwendung nach Anspruch 9, **dadurch gekennzeichnet, dass** ein Abstand der Achse (45) der Spannrolle (43) von einer Verbindungsgeraden (V) zwischen der Achse (40) der Doppelriemenscheibe (35) und der Achse (42) der Riemenscheibe (41) zum Antrieb der Vorbeschleunigungstrommel kleiner als 200 mm, vorzugsweise kleiner als oder gleich 190 mm, ist.

11. Riementrieb eines selbstfahrenden Mähdreschers (20), insbesondere eine Einlegetrommel oder eine Vorbeschleunigungstrommel antreibender Riementrieb (22, 23), **gekennzeichnet durch** einen Verbundriemen (1) gemäß einem der Ansprüche 1 bis 4.

## Claims

1. A composite belt (1) comprising a cover layer (2) and two ribs (6) connected thereto in a force-transmitting manner, wherein in cross section, each rib (6) has the shape of a symmetrical trapezoid and respectively connects via a base (8) to a longer side of a rectangle which a cross section of the cover layer (2) forms, and wherein, in an upper structure (13) facing the base (8) and in a lower structure (14) facing away from the base (8), each rib (6) has a respective elastomeric material as well as a plurality of tension cords (16) between the upper structure (13) and the lower structure (14) which are respectively parallel to each other and respectively extend in the longitudinal direction of the composite belt (1) in order to take up the longitudinal forces to be transmitted by the composite belt (1), **characterized in that** the length of the composite belt (1) is between 2500 mm and 2900 mm, the breaking load of the composite belt (1) is 45000 N and the power which can be transmitted by the composite belt (1) in continuous operation is at least 50 kW.

2. The composite belt according to claim 1, **characterized in that** a maximum elongation of the composite belt (1) after an operation with a minimum continuous power of 50 kW transmitted by the composite belt (1) over a time period of 200 hours is 1% of the original length of the composite belt (1).

3. The composite belt according to claim 1 or claim 2, **characterized in that** the length is between 2600 mm and 2800 mm, in particular 2640 mm or 2800 mm.

4. The composite belt according to one of claims 1 to 3, **characterized in that** at least a portion of the tension cords (16) contains filaments which consist at least in part of an aromatic polyamide, in particular high strength aramid, and/or carbon.

5. Use of a composite belt (1) according to one of claims 1 to 4 in a belt drive (22, 33) of a self-propelled combine harvester (20), in particular in a belt drive (22, 33) driving a feed drum or a pre-acceleration drum.

6. The use according to claim 5, **characterized in that** the belt drive (22) has two belt pulleys (23, 24) with identical diameters, with the feed drum being capable of being driven by means of one belt pulley (24), wherein a tensioning roller (28) is disposed in a slack side (27) of the belt drive (22) and is disposed entirely within an envelope (H) of the belt drive (22) - considered without the tensioning roller (28).

7. The use according to claim 6, **characterized in that** a respective wrap angle at the belt pulley (23, 24) is greater than 220° and/or a wrap angle at the tensioning roller (28) is greater than 60°, preferably greater than 80°.

8. The use according to claim 5, **characterized in that** the belt drive (33) has a double belt pulley (35) serving as the drive, and which is coupled to a threshing drum shaft (39), wherein the composite belt acts on a belt pulley (36) of the double belt pulley (35) which has a smaller diameter, and furthermore has a belt pulley (41) acting as the output, by means of which a pre-acceleration drum can be driven, and has a tensioning roller (43) disposed in a slack side (46) and which is disposed entirely within an envelope (H) of the belt drive (33) - considered without the tensioning roller (43), wherein the envelope (H) wraps round the belt pulley (37) of the double belt pulley (35) with the larger diameter.

9. The use according to claim 8, **characterized in that** a wrap angle at the belt pulley (36) of the double belt pulley (35) with the smaller diameter is greater than 200° and/or a wrap angle at the belt pulley (41) driving the pre-acceleration drum (41) is greater than or equal to 200° and/or a wrap angle at the tensioning roller (43) is greater than 60°.

10. The use according to claim 9, **characterized in that** a distance of the axis (45) of the tensioning roller (43) from a straight connecting line (V) between the axis (40) of the double belt pulley (35) and the axis (42) of the belt pulley (41) for driving the pre-acceleration drum is less than 200 mm, preferably less than or equal to 190 mm.

11. A belt drive for a self-propelled combine harvester (20), in particular a belt drive (22, 23) driving a feed drum or a pre-acceleration drum, **characterized by** a composite belt (1) in accordance with one of claims 1 to 4.

## Revendications

1. Courroie composite (1) comprenant une couche de recouvrement (2) et deux nervures (6) reliées à celle-ci de manière à transmettre des forces, chaque nervure (6) présentant en coupe transversale la forme d'un trapèze symétrique et se raccordant respectivement avec une base (8) à un grand côté d'un rectangle qui forme une section transversale de la couche de recouvrement (2), et chaque nervure (6) présentant, dans une partie supérieure (13) tournée vers la base (8) et dans une partie inférieure (14) éloignée de la base (8), respectivement un matériau élastomère, ainsi qu'entre la partie supérieure (13) et la partie inférieure (14), une pluralité de tiges de traction (16) qui s'étendent parallèlement les unes aux autres et chacune dans le sens longitudinal de la courroie composite (1) et sont destinées à absorber les forces longitudinales devant être transmises par la courroie composite (1), **caractérisée en ce que** la longueur de la courroie composite (1) est comprise entre 2 500 mm et 2 900 mm, la charge de rupture de la courroie composite (1) est de 45 000 N, et la puissance pouvant être transmise par la courroie composite (1) en service continu est d'au moins 50 kW.

2. Courroie composite selon la revendication 1, **caractérisée en ce qu'**un allongement maximal de la courroie composite (1), après un fonctionnement avec une puissance permanente minimale de 50 kW transmise par la courroie composite (1), pendant une durée de 200 heures, est de 1 % de la longueur initiale de la courroie composite (1).

3. Courroie composite selon la revendication 1 ou 2, **caractérisée en ce que** la longueur est comprise entre 2 600 mm et 2 800 mm, notamment entre 2 640 mm et 2 800 mm.

4. Courroie composite selon une des revendications 1 à 3, **caractérisée en ce qu'**au moins une partie des tiges de traction (16) contient des filaments qui sont constitués au moins en partie d'un polyamide aromatique, notamment d'aramide à haute résistance, et/ou de carbone.

5. Utilisation d'une courroie composite (1) selon une des revendications 1 à 4, dans une transmission à courroie (22, 33) d'une moissonneuse-batteuse (20) automotrice, notamment dans une transmission à courroie (22, 33) entraînant un tambour d'insertion ou un tambour de pré-accélération.

6. Utilisation selon la revendication 5, **caractérisée en ce que** la transmission à courroie (22) présente deux poulies à courroie (23, 24) de diamètre identique, parmi lesquelles une poulie à courroie (24) permet d'entraîner le tambour d'insertion, sachant que dans un brin mou (27) de la transmission à courroie (22), il est prévu une poulie de tension (28) qui est disposée entièrement à l'intérieur d'une courbe enveloppe (H) de la transmission à courroie (22) - vu sans la poulie de tension (28).

7. Utilisation selon la revendication 6, **caractérisée en ce qu'**un angle d'enroulement respectif sur la poulie à courroie (23, 24) est supérieur à 220° et/ou un angle d'enroulement sur la poulie de tension (28) est supérieur à 60°, de préférence supérieur à 80°.

8. Utilisation selon la revendication 5, **caractérisée en ce que** la transmission à courroie (33) présente une double poulie à courroie (35) qui sert d'entraînement et est couplée à un arbre de tambour batteur (39), la courroie composite agissant sur une poulie à courroie (36) de plus petit diamètre de la double poulie à courroie (35), et présente en outre une poulie à courroie (41) servant de moyen mené et permettant d'entraîner un tambour de pré-accélération, et présente une poulie de tension (43) qui est placée dans un brin mou (46) et est disposée complètement à l'intérieur d'une courbe enveloppe (H) de la transmission à courroie (33) - vu sans la poulie de tension (43) -, la courbe enveloppe (H) enveloppant la poulie à courroie (37) de plus grand diamètre de la double poulie à courroie (35).

9. Utilisation selon la revendication 8, **caractérisée en ce qu'**un angle d'enroulement sur la poulie à courroie (36) de plus petit diamètre de la double poulie à courroie (35) est supérieur à 200° et/ou un angle d'enroulement sur la poulie à courroie (41) entraînant le tambour de pré-accélération est supérieur ou égal à 200° et/ou un angle d'enroulement sur la poulie de tension (43) est supérieur à 60°.

10. Utilisation selon la revendication 9, **caractérisée en ce qu'**une distance de l'axe (45) de la poulie de tension (43) par rapport à une droite de liaison (V) entre l'axe (40) de la double poulie à courroie (35) et l'axe (42) de la poulie à courroie (41) pour l'entraînement du tambour de pré-accélération est inférieure à 200 mm, de préférence inférieure ou égale à 190 mm.

11. Transmission à courroie d'une moissonneuse-batteuse (20) automotrice, notamment transmission à courroie (22, 23) entraînant un tambour d'insertion ou un tambour de pré-accélération, **caractérisée en ce qu'**elle comprend une courroie composite (1) selon une des revendications 1 à 4.
